# EUROPEAN PATENT SPECIFICATION

(11) **EP 1 502 854 B1**
(45) Date of publication and mention of the grant of the patent: **07.05.2008**
(21) Application number: 04077085.1
(22) Date of filing: 19.07.2004
(51) Int. Cl.: B65B 9/02, B65B 25/14

(54) **Packaging machine for stacks of correspondence**
Verpackungsmaschine für Korrespondenzstapel
Machine d'emballage pour piles de correspondance

(30) Priority: 28.07.2003 IT MI20031545
(43) Date of publication of application: 02.02.2005
(73) Proprietor: SITMA S.p.A., I-41057 Spilamberto, Modena (IT)
(72) Inventor: Ballestrazzi, Aris, 41056 Savignano Sul Panaro (Modena) (IT); Tassi, Lamberto, 41056 Savignano Sul Panaro (Modena) (IT)
(74) Representative: De Gregori, Antonella

(56) References cited:
- DE-A- 1 920 863
- US-A- 3 191 356
- US-A- 3 508 378
- US-A- 4 058 426

## Description

The present invention relates to a packaging machine for stacks of correspondence.

In the field of correspondence packaging, for example for mail sorting for each postman, or sorting based on postal codes, a selection is made of the specific mail items which must be held together in some way, to prevent them from being mixed during handling.

These stacks of correspondence consist of products of various sizes, of different widths, lengths and thicknesses. Keeping these products together is therefore not as easy as might appear, with the danger of upsetting the stacks of products and mixing the correspondence of the various stacks.

Furthermore, contrary to other products which are packaged in continuous for the whole duration of the work shift, correspondence is handled for purposes of being separated when it arrives at the sorting office. It is therefore necessary to have various machines for obtaining stable stacks of correspondence, separated from other similar types and easy to form, above all in short and rapid times.

US Patent No. 4058426 discloses a wrapping machine in which articles are moved into opposing films according to the preamble of claim 1.

US Patent No. 3191356 shows an apparatus for packaging articles comprising first and second heat-sealing and cutting means which operate concurrently for sealing and cutting a film around said article.

An objective of the present invention is to provide a packaging machine for stacks of correspondence which solves the general problem specified above.

Another objective is to provide a packaging machine for stacks of correspondence which has a simple and rapid functioning when necessary, without complicated preparation times.

A further objective is to provide a packaging machine for stacks of correspondence which is structurally simple and easy to use, without involving high costs.

These objectives according to the present invention are achieved by providing a packaging machine for stacks of correspondence as illustrated in claim 1.

Further characteristics of the invention are specified in the subsequent claims.

The characteristics and advantages of a packaging machine for stacks of correspondence according to the present invention will appear more evident from the following illustrative and non-limiting description, referring to the enclosed schematic drawings, in which:

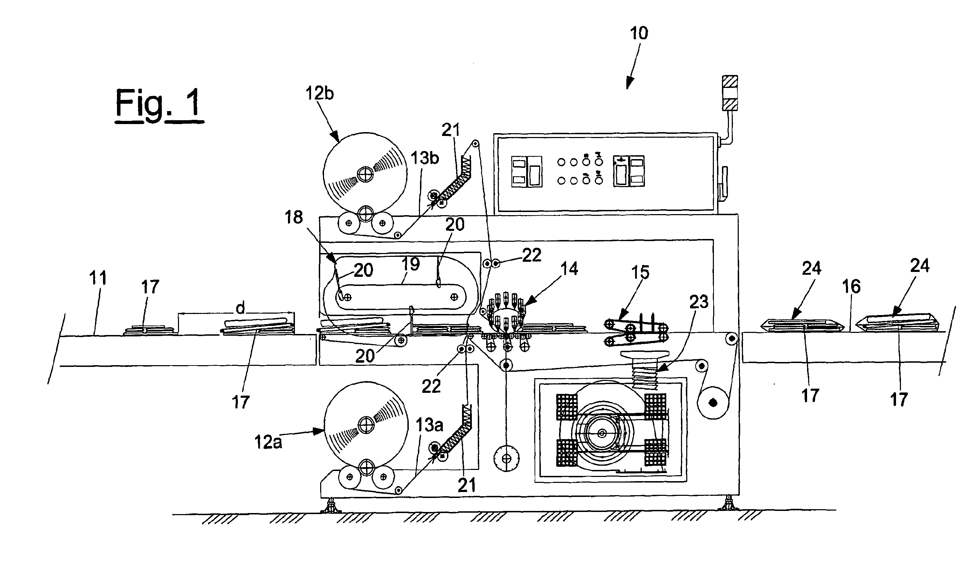

Figure 1 is a raised side view of a packaging machine for stacks of correspondence according to the present invention, and

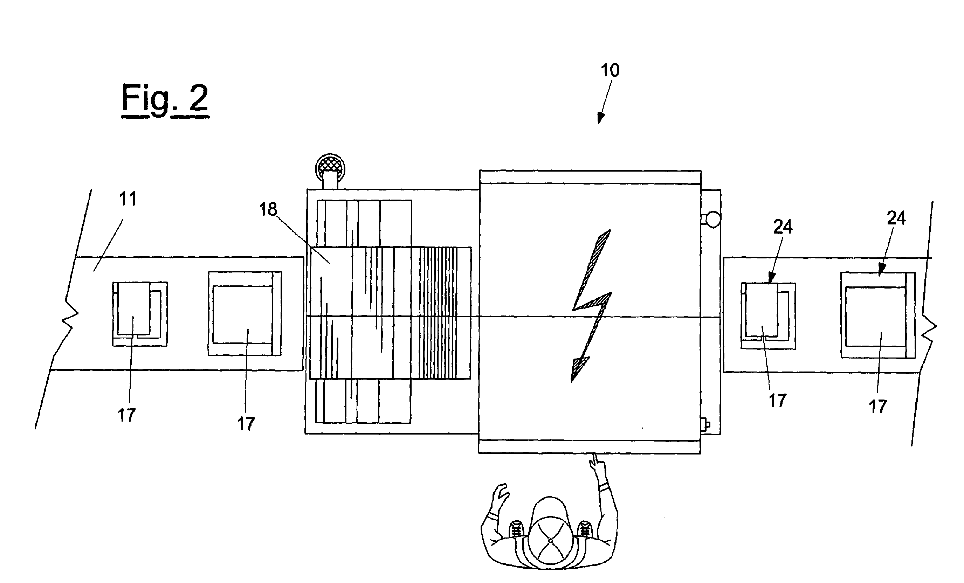

Figure 2 is a plan view from above of the machine illustrated in figure 1.

With reference to the figures, these show a packaging machine for stacks of various kinds of correspondence. Said packaging machine, indicated as a whole with 10, allows the handling and packaging of correspondence 17, such as envelopes, small parcels, newspapers, magazines, printed material of different sizes, etc. having a common destination or an area destination such as a district (in the case of a postman) or a town or village (in the case of a common postal code.

The packaging machine 10 for stacks of correspondence essentially comprises, in the example provided, a feeding conveyor 11 which receives the stacks of correspondence 17 from a sorting line (not shown). The feeding conveyor 11 can consist of a belt or various parallel belts or a pushers which run within a supporting plane, arranged so as to promote the advancing of the stacks of correspondence 17.

The stacks of correspondence 17 arrive separately in succession at a distance "d" from each other and are sent to a subsequent packaging area. This is achieved by means of an additional feeding group 18, consisting of continuous ring closed elements, such as belts or chains 19, carrying a series of pushers 20, arranged above the feeding conveyor 11. This feeding group 18 pushes the stacks 17 towards the above-mentioned packaging area, guaranteeing their advancing.

Unwinding or unrolling groups 12a and 12b, are also envisaged, which feed films of packaging material 13a and 13b, such as polyethylene or polypropylene, for wrapping each single stack 17. The unrolling groups 12a and 12b are completed by retaining elements 21 which withhold preselected quantities of film 13a and 13b, before this reaches a transversal welding group 14, after passing through calenders 22. Furthermore, downstream of the transversal welding group 14, there is also a longitudinal welding group 15, on an unloading conveyor 16.

Below the longitudinal welding group 15, there is a trimming aspirator 23 which collects portions of the packaging film ends removed by the intervention of the longitudinal welding group 15.

Packages 24, consisting of stacks of correspondence 17 contained inside films 13a, 13b welded together, are then unloaded, ready for their end-destination, i.e. to be delivered to the postman or sent to towns or final distribution areas.

The functioning of a similar packaging machine, according to the present invention, is as follows.

As already specified, the stacks of correspondence 17 arrive from one or more sorting lines (not shown) and are passed onto the feeding conveyor 11 which, in collaboration with the feeding group 18, positioned above, pushes the stacks 17 towards the packaging areas.

When a stack of correspondence 17 arrives near the packaging area, the unwinding or unrolling groups 12a and 12b, feed the films of packaging material 13a and 13b for wrapping the above stacks 17. If the retaining elements 21 associated with the unrolling groups 12a and 12b contain high quantities of film 13a and 13b, or if a high speed packaging must be effected, the films 13a and 13b are rapidly fed around the stacks 17 before reaching the transversal welder 14. As the calenders 22 are run at the same advance rate as the correspondence 17, they are capable of supplying the quantity of film which is strictly necessary for effecting the packaging.

The pushers 20 ensure in this phase, that the tail-end of the correspondence 17, forming the stack, is perfectly in phase with the intervention of the welding bar of the transversal welder 14, thus guaranteeing that the length of the package is adequate for the length of the correspondence contained therein.

Furthermore, when a stack arrives at the transversal welding group 14, the lower and upper unwinding or unrolling groups 12a and 12b, feeding the film, also allow very light stacks of products to advance towards the transversal welder 14.

The transversal welder thus forms a so-called "sleeve" packaging, i.e. open at the side ends in a transversal direction with respect to that of the advancing.

The advancing of this "sleeve" package towards the longitudinal welding group 15 effects the complete side closing of the package, contemporaneously causing the removal of excess film trimmings.

These side trimmings are sucked up, during the cutting and welding operation effected by the longitudinal welder 15, by the underlying trimming aspirator 23. Said trimming aspirator 23 collects the side trimmings or portions of the ends of the packaging films removed by the intervention of the longitudinal welding group 15.

The width of the longitudinal welders is naturally established or pre-established in relation to the maximum width of the correspondence or products to be packaged.

The trimming aspirator 23 is incorporated in the lower part of the packaging machine and can comprise an extractable basket for recovering the side scraps of film.

Furthermore, the motorization of the packaging machine can also be activated with an electric shaft follow-up system.

Whereas each pusher 20 of the feeding group 18 follows each stack of correspondence 17, fed by the conveyor 11, in a "1 by 1" system, the transversal and longitudinal welding groups stop and start, in phase, in relation to the presence or absence of stacks of products to be packaged.

In this way, a packaging machine for stacks of correspondence according to the present invention, achieves the objectives listed above.

Numerous modifications and variants can be applied to the packaging machine for stacks of correspondence of the present invention thus conceived, all included within the scope of the invention as defined in the appended claims.

Furthermore, in practice, the materials used as also their dimensions and components can vary according to technical demands.

## Claims

1. A packaging machine for stacks of various kinds of correspondence comprising a feeding conveyor (11) of stacks of correspondence (17) from a sorting line, a feeding group (18) equipped with pushers (20), situated above the feeding conveyor (11), upper and lower unwinding or unrolling groups (12a, 12b) which feed films of packaging material (13a, 13b), for wrapping each single stack (17), a transversal welding group (14) and an unloading conveyor (16), **characterized by** further comprising a longitudinal welding group (15) disposed downstream of said transversal welding group (14) on said unloading conveyor (16) and a trimming aspirator (23) situated below said longitudinal welding group (15), said upper and lower unwinding or unrolling groups (12a, 12b) which feed films of packaging material (13a, 13b) being associated with respective retaining elements (21) which contain high quantities of film (13a, 13b) and with respective calenders (22) disposed downstream of said retaining elements (21) and running at the same advance rate as said stacks of correspondence (17).

2. The packaging machine for stacks of correspondence according to claim 1, **characterized in that** said feeding group (18) comprises continuous ring closed elements (19) carrying said pushers (20) situated above said feeding conveyor (11) for moving said stacks of correspondence (17).

3. The packaging machine for stacks of correspondence according to claim 1, **characterized in that** said stacks of correspondence (17) are arranged separately in succession at a distance "d" from each other.

## Patentansprüche

1. Verpackungsmaschine für Stapel verschiedener Arten von Korrespondenz, umfassend einen Zuführförderer (11) für Korrespondenzstapel (17) von einer Sortierlinie, eine Zuführbaugruppe (18) die mit Schiebern (20) versehen ist, die oberhalb des Zuführförderers (11) angeordnet ist, obere und untere Abwickel- oder Abrollbaugruppen (12a, 12b), die Filme aus Verpackungsmaterial (13a, 13b) zuführen, um jeden einzelnen Stapel (17) einzuwickeln, eine Transversalschweißbaugruppe (14) und einen Abführförderer (16),
**dadurch gekennzeichnet, dass** sie ferner umfasst: eine Longitudinalschweißbaugruppe (15), die stromabwärts der Transversalschweißbaugruppe (14) an dem Abführförderer (16) angeordnet ist, und einen Zuschneidsauger, der unterhalb der Longitudinalschweißbaugruppe (15) angeordnet ist, wobei die oberen und unteren Abwickel- oder Abrollbaugruppen (12a, 12b), die Filme aus Verpackungsmaterial (13a, 13b) zuführen, jeweiligen Halteelementen (21) die große Filmmengen (13a, 13b) halten, und jeweiligen Kalandern (22) zugeordnet sind, die stromabwärts der Halteelemente (21) angeordnet sind und mit derselben Vorschubrate laufen, wie die Korrespondenzstapel (17).

2. Verpackungsmaschine für Korrespondenzstapel nach Anspruch 1,
**dadurch gekennzeichnet, dass** die Zuführbaugruppe (18) durchgehende geschlossene Ringelemente (19) umfasst, die die Schieber (20) tragen, welche oberhalb des Zuführförderers (11) zum Bewegen der Korrespondenzstapel (17) angeordnet sind.

3. Verpackungsmaschine für Korrespondenzstapel nach Anspruch 1,
**dadurch gekennzeichnet, dass** die Korrespondenzstapel (17) separat nacheinander in einem Abstand "d" voneinander angeordnet sind.

## Revendications

1. Machine d'emballage pour piles de divers types de correspondance comprenant un distributeur à courroie (11) amenant des piles de correspondance (17) provenant d'une ligne de tri, un groupe chargeur (18) équipé de poussoirs (20), situés au-dessus du distributeur à courroie (11), des groupes de débobinage ou de déroulement supérieur et inférieur (12a, 12b) qui fournissent des films de matériau d'emballage (13a, 13b), pour envelopper chaque pile discrète (17), un groupe de soudage transversal (14) et un convoyeur de déchargement (16), **caractérisée en ce qu'**elle comprend en outre un groupe de soudage longitudinal (15) placé en aval dudit groupe de soudage transversal (14) sur ledit convoyeur de déchargement (16) et un aspirateur à chutes (23) situé sous ledit groupe de soudage longitudinal (15), lesdits groupes de débobinage ou de déroulement supérieur et inférieur (12a, 12b) qui fournissent des films de matériau d'emballage (13a, 13b) étant associés à des éléments de retenue respectifs (21) qui contiennent de grandes quantités de film (13a, 13b) et à des calandres respectives (22) placées en aval desdits éléments de retenue (21) et fonctionnant à la même vitesse d'avance que lesdites piles de correspondance (17).

2. Machine d'emballage pour piles de correspondance selon la revendication 1, **caractérisée en ce que** ledit groupe chargeur (18) comprend des éléments fermés d'anneau continu (19) portant lesdits poussoirs (20) situés au-dessus dudit distributeur à courroie (11) pour déplacer lesdites piles de correspondance (17).

3. Machine d'emballage pour piles de correspondance selon la revendication 1, **caractérisée en ce que** lesdites piles de correspondance (17) sont placées les unes à la suite des autres, séparées d'une distance "d" les unes des autres.
